**Europäisches Patentamt**

**European Patent Office**

**Office européen des brevets**

(19)

(11) Veröffentlichungsnummer : **0 531 555 B1**

(12) **EUROPÄISCHE PATENTSCHRIFT**

(45) Veröffentlichungstag der Patentschrift :
07.06.95 Patentblatt 95/23

(21) Anmeldenummer : **91115103.3**

(22) Anmeldetag : **06.09.91**

(51) Int. Cl.⁶ : **H02G 3/08**

(54) **Gehäuse, beispielswiese für Fehlerstromschutzschalter.**

(43) Veröffentlichungstag der Anmeldung :
17.03.93 Patentblatt 93/11

(45) Bekanntmachung des Hinweises auf die
Patenterteilung :
07.06.95 Patentblatt 95/23

(84) Benannte Vertragsstaaten :
AT DE ES FR GB

(56) Entgegenhaltungen :
WO-A-86/01350
DE-A- 2 824 477
DE-B- 1 122 592
DE-B- 1 132 617
DE-U- 8 909 464
FR-A- 1 153 837

(73) Patentinhaber : **SIEMENS
AKTIENGESELLSCHAFT
Wittelsbacherplatz 2
D-80333 München (DE)**

(72) Erfinder : **Baldauf, Josef, Dipl.-Ing. (FH)
Schulberg 19
W-8417 Lappersdorf (DE)**
Erfinder : **Herschberger, Josef, Dipl.-Ing. (FH)
Ostheim 26
W-8400 Regensburg (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Gehäuse, beispielsweise für elektrische Geräte oder deren Bauteile, beispielsweise Haltemagnete für Fehlerstromschutzschalter, im einzelnen nach Gattungsbegriff von Patentanspruch 1. Ein Grundgehäuse ist hierbei durch ein Verschlußstück staubdicht zu verschließen, wobei Grundgehäuse und Verschlußstück an ihren Verbindungsrändern eine Klemmverbindung bilden. Eine derartige abdichtende Klemmverbindung für ein Gehäuse ist bekannt (DE-A-2 824 477). Bei der bekannten Klemmverbindung greifen in eine V-förmige Nut zwei Lippen eines Dichtungslippenpaares ein, die unter Anpreßdruck von einer Befestigungsschraube abdichtend an den Nutenseitenwänden anliegen.

Derartige Gehäuse aus staubdicht verbundenen Gehäuseteilen sind in den verschiedenartigsten Ausführungen vorgesehen. So ist eine abdichtende Verbindung nach Art von Nut und Feder mit zwei quer zur Nutseite stehenden parallelen Lippen bekannt (WO-A-8 601 350, FIG 3). Die untere Lippe paßt sich hierbei einem runden Nutboden an und die obere Lippe übergreift die Nut deckelartig.

Bei einem bekannten zweischaligen Gehäuse zur Bildung eines Anschlußkastens (DE-A-1 122 592) weist eine Halbschale eine Nut mit gerundetem Nutboden auf, in den eine wulstige formangepaßte Feder eingedrückt werden kann, bzw. bei konzentrischer Anordnung einrasten kann.

Bekannt sind auch Rastverschlüsse bei Behältnissen aus elastischem Material, bei denen eine Nut in einem Deckel haubenartig auf dem Wulst eines als Feder dienenden Dosenrandes aufschnappt (FR-A-1 153 837). Andere Gehäuse aus Kunststoff, die staubdicht abschließen sollen, hat man in der Praxis auch so ausgeführt, daß unter Erwärmen des Kunststoffes das Gehäuse an den Verbindungsrändern verschweißt. Solche staubdichten Gehäuse sind beispielsweise für Haltemagnete von Fehlerstromschutzschaltern erforderlich.

Der Erfindung liegt die Aufgabe zugrunde, ein Gehäuse aus Grundgehäuse und Verschlußstücken zu entwickeln, das staubdicht ist, mechanisch stabil zusammenhalt und leicht zu montieren ist.

Die Lösung der geschilderten Aufgabe besteht nach der Erfindung in einem Gehäuse nach Patentanspruch 1. Das Grundgehäuse und zumindest ein Verschlußstück bilden an ihren Verbindungsrändern eine Klemmverbindung, indem in eine nutförmige Ausnehmung eine Feder mit zumindest einer seitlich anstellbaren Lippe einsetzbar ist. Die gegen die Nutwand sich anstellende Lippe sorgt hierbei für Staubdichtheit und für ein mechanisches Verklemmen, so daß ein oder mehrere Verschlußstücke vom Grundgehäuse ohne Zerstörung des Gehäuses und ohne Spezialwerkzeuge nicht mehr zu lösen ist bzw. sind. Die nutförmige Ausnehmung bzw. die Feder kann sowohl am Grundgehäuse oder am Verschlußstück ausgeführt sein. Es ist wesentlich, daß Abmessungen und Material so aufeinander abgestimmt sind, daß sich die Lippe in der Nut aufgrund ihrer Eigenelastizität und ihrer Länge im Verhältnis zu ihrer Dicke an der Nutwand abstützt. Es ist besonders günstig, wenn sich das Ende der Lippe gegen die Nutwand stemmen kann, wenn es also entsprechend kurz ausgeführt ist.

Auch bei einer gedanklichen Zusammenfassung verschiedener Verschlüsse nach dem geschilderten Stand der Technik kann man keinen mechanisch stabil zusammenhaltenden Verschluß finden, der gegen-Zugrichtung beim Lösen eines Deckels von einem Dosenrand eine mechanisch feste Verbindung ergäbe. Wenn man eine Dose nach DE-A-2 824 477 mit einer Verschließtechnik nach DE-A-1 122 592 ausrüstet, gelangt man nur bei konzentrischer, ringartiger Anordnung von Nut und Feder zu einem gewissen mechanischen Halt. Auch bei einer Deckel-Dosen-Verbindung nach FR-A-1 153 837 führt eine lippenartige Ausgestaltung des als Feder dienenden Randes, gemäß DE-A-2 824 477 nicht zu einem mechanisch festen Verbund ohne zusätzliche Befestigungsschrauben. Bei Dosen nach Art der FR-A-1 153 837 soll der Deckel ohne mechanische Zerstörung des Gehäuses ohnehin wieder lösbar sein.

Das Gehäuse kann aus einem Thermoplast, wie z. B. Polymid, gefertigt werden. Bei einer Bemessung nach Patentanspruch 3 wird beim Zusammenführen der Gehäuseteile die Lippe umgelenkt, so daß sie sich gegen die Nutwand gegen ein Wiederauseinandernehmen verkantend abstützt. Hierbei ist es vorteilhaft, daß das Lippenende kantig ist.

Feder und Lippe können nach Patentanspruch 4 auch lediglich gedachte Teile einer sich im Querschnitt konisch verjüngenden Wand sein. Die Lippe kann hierbei in einer nutförmigen Ausnehmung mit einem runden Boden umgelenkt werden.

Um Toleranzen auszugleichen ist es günstig, wenn das Gehäuse nach Patentanspruch 6 bei einer die Feder tragenden Wand sich derart verjüngt, daß eine toleranzausgleichende Federung der Wand in seitlicher Richtung entsteht.

Es können auch mehrere, gegen die Öffnungsrichtung der Gehäuseteile sich V-förmig abstützende Lippen an einer Feder ausgeführt sein.

Bei all diesen Ausführungsformen wird das Relaxionsbestreben von Kunststoffen ausgenutzt. Da die Lippe in ihre Ausgangslage zurückkehren möchte, legt sie sich bei entsprechender Bemessung an der Nutwand an, so daß Staubdichtheit gewährleistet bleibt.

Die Erfindung soll nun anhand von in der Zeichnung grob schematisch wiedergegebenen Ausführungsbeispielen näher erläutert werden:

In FIG 1 ist ein Gehäuse aus Grundgehäuse und Verschlußstück im offenen, also noch nicht montierten Zustand nach einem ersten Ausführungsbeispiel im Querschnitt wiedergegeben.

In FIG 2 ist das geschlossene Gehäuse aus Grundgehäuse und Verschlußstück nach Figur 1 veranschaulicht.

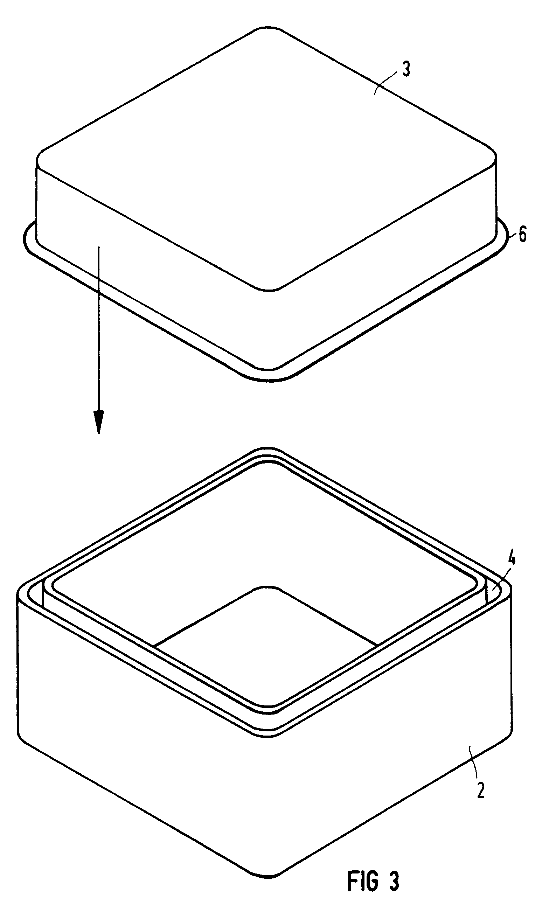

In FIG 3 ist ein Ausführungsbeispiel für ein Gehäuse in der Ausführung nach Figur 1 perspektivisch veranschaulicht.

In FIG 4 sind die Verbindungsränder nach Figur 2 in vergrößertem Maßstab wiedergegeben.

In FIG 5 ist ein anderes Ausführungsbeispiel in der Darstellung nach Figur 4 wiedergegeben.

In FIG 6 ist ein weiteres Ausführungsbeispiel in der Darstellung nach Figur 4 veranschaulicht.

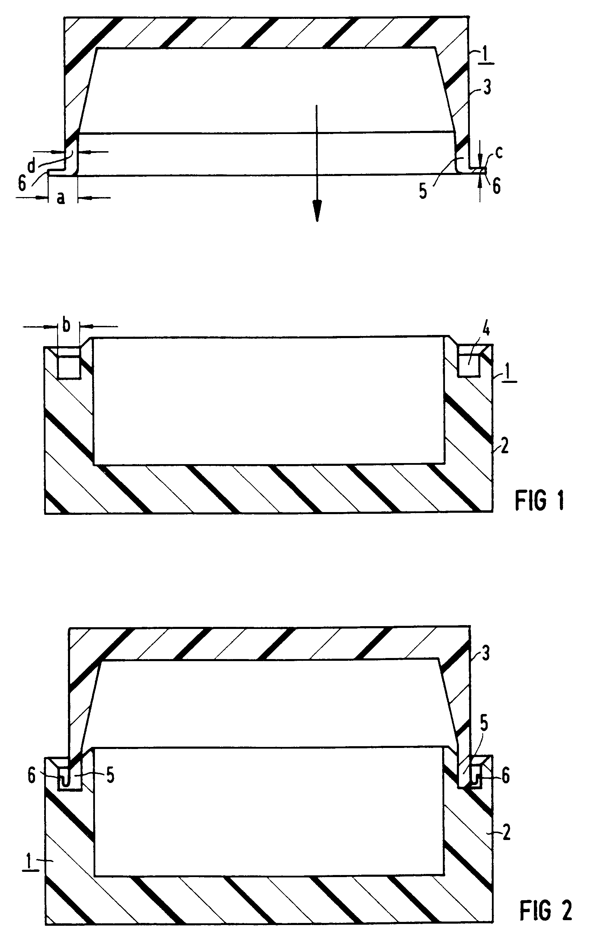

Das Gehäuse 1 nach Figur 1 besteht aus einem Grundgehäuse 2 und aus einem Verschlußstück 3. Im Ausführungsbeispiel bildet das Grundgehäuse eine nutförmige Ausnehmung 4, in die eine Feder 5 mit einer Lippe 6 eingeführt werden kann. Die Feder 5 weist im Ausführungsbeispiel eine seitlich angestellte bzw. abstehende Lippe 6 auf. Wenn das Verschlußstück 3 in das Grundgehäuse 2 beim Montieren eingedrückt wird, biegt sich eine seitlich abstehende Lippe 6 zurück, so daß sie gegen die Nutwand ansteht, wie es in Figur 2 veranschaulicht ist.

Eine toleranzausgleichende Federung der die Feder 5 tragenden Wand kann man vorteilhaft dadurch erreichen, daß sich die Wand 7 in ihrem Querschnitt verjüngt, wie es in Figur 4 veranschaulicht ist.

Das Gehäuse kann aus einem Thermoplast, wie z.B. Polyamid, gefertigt werden. Wenn die Lippe 6 am Ende der Feder seitlich von dieser absteht, wie es in Figur 1 veranschaulicht ist, ist es günstig wenn die Basis der Feder in Richtung der Nutbreite zusammen mit der Lippe eine Breite a nach Figur 1 aufweist, die zur Nutbreite b in einem Verhältnis von

$$a = 1,5 \, b \qquad \text{und} \qquad a = 1,35 \, b$$

steht, wobei die Federdicke d im gedachten Querschnitt etwa der Beziehung entspricht

$$d = 0,57 \times b$$

und die Lippendicke c etwa der Beziehung genügt

$$c = 0,14 \times b.$$

Beispielsweise können b 3,5 mm, a 5mm, d 1,9 mm und c 0,49 mm betragen. a kann im Ausführungsbeispiel vorteilhafterweise zwischen 4,73 und 5,25 mm liegen.

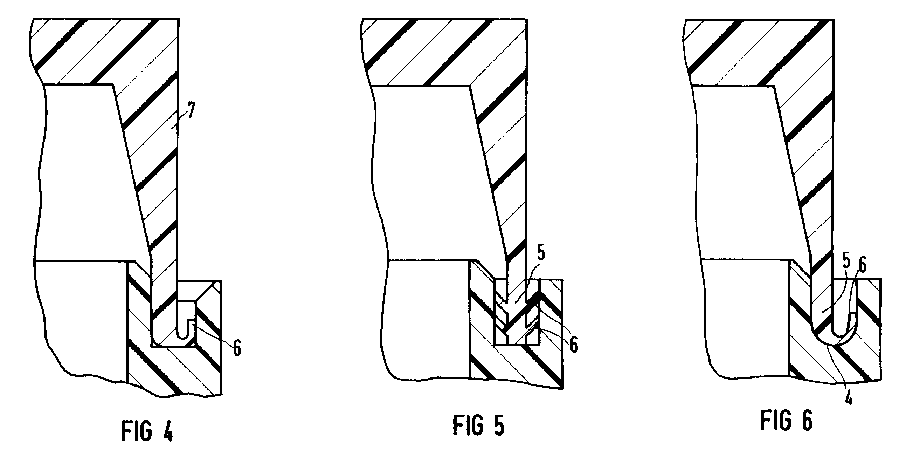

Von der Feder 5 können auch mehrere Lippen 6 nach Figur 5 abstehen, die gegen die theoretische Öffnungsrichtung des Gehäuses ein weit offenes V bilden. Die Lippen spreizen sich dann gegen die Nutwände und verhindern ein Öffnen des Gehäuses mit gewöhnlichen Mitteln.

Feder 5 und Lippe 6 können auch lediglich gedachte Teile einer sich im Querschnitt konisch verjüngenden Wand sein. Wenn die nutförmige Ausnehmung 4 nach Figur 6 einen runden Boden bildet, kann bei einer geglätteten Innenrundung oder unter Zuhilfenahme eines Gleitmittelstreifens die Lippe 6 bei Zusammenführen des Gehäuses umgelenkt werden, so daß sie sich an einer rauheren Gegenwand verklemmt.

Bei einer geeigneten konstruktiven Ausführung von Grundgehäuse und Verschlußstück läßt sich nach den erfindungsgemäßen Prinzipien ein staubdichtes und mechanisch fest verbundenes Gehäuse ohne zusätzliche Hilfsmittel, wie Verkleben oder Verschweißen, erzielen. Durch Formgebung, Hinterschneidungen und zusätzliche Schnapphaken läßt sich in an sich bekannter Weise die Verbindung der Gehäuseteile fördern.

**Patentansprüche**

1. Gehäuse (1), beispielsweise für elektrische Geräte oder deren Bauteile, beispielsweise Haltemagnete für Fehlerstromschutzschalter, dessen Grundgehäuse (2) nach Montage der aufzunehmenden Elemente mittels Verschlußstücken (3) zu schließen ist, wobei Grundgehäuse (2) und Verschlußstück (3) an ihren Verbindungsrändern eine Klemmverbindung bilden, indem in eine nutförmige Ausnehmung (4) eine Feder (5) mit zumindest einer seitlich anstellbaren Lippe (6) einsetzbar ist,
**dadurch gekennzeichnet,**
daß Abmessungen und Material derart aufeinander abgestimmt sind, daß beim Zusammenführen der Gehäuseteile (1, 2) die Lippe (6) in der Nut aufgrund ihrer Eigenelastizität und ihrer Länge im Verhältnis zu ihrer Dicke umgelenkt wird, so daß sie sich gegen die Nutwand (der Nut 4) gegen ein Wiederauseinandernehmen verkantet abstützt.

2. Gehäuse nach Anspruch 1,
**dadurch gekennzeichnet,**

daß das Gehäuse aus einem Thermoplast wie z.B. Polyamid gefertigt ist.

3. Gehäuse nach Anspruch 1,
**dadurch gekennzeichnet,**
daß bei Polyamid als Gehäusematerial die Lippe (6) am Ende der Feder (5) seitlich von dieser absteht, daß die Basis der Feder (5) in Richtung der Nutbreite am Ende der Feder zusammen mit der Lippe (6) eine Breite a aufweist, die zur Nutbildung b in einem Verhältnis von

$$a = 1,5\,b \qquad und \qquad a = 1,35\,b$$

steht, wobei die Federdicke d im gedachten Querschnitt etwa der Beziehung entspricht

$$d = 0,57 \times b$$

und die Lippendicke c etwa der Beziehung genügt

$$c = 0,14 \times b.$$

4. Gehäuse nach Anspruch 1,
**dadurch gekennzeichnet,**
daß Feder (5) und Lippe (6) gedachte Teile einer sich im Querschnitt konisch verjüngenden Wand sind.

5. Gehäuse nach Anspruch 4,
**dadurch gekennzeichnet,** daß die nutförmige Ausnehmung (4) einen runden Boden bildet.

6. Gehäuse nach Anspruch 1 oder 4,
**dadurch gekennzeichnet,** daß eine die Feder (5) tragende Wand sich derart verjüngt, daß eine toleranzausgleichende Federung ensteht.

**Claims**

1. A casing (1), e.g. for electrical devices or their components such as holding-magnets for fault-current protection switches, the casing base (2) of which is, after assembly of the elements to be accommodated, to be sealed by means of closure elements (3), whereby the connecting edges of the casing base (2) and the closure element (3) form a clamping joint inasmuch as a tongue (5), at least one lip (6) of which is capable of lateral abutment, can be inserted into a groove-shaped recess (4),
**characterised** in that
the dimensions and the material are matched with one another in such a way as to ensure that owing to its inherent elasticity and its length in relation to its thickness the lip (6) is folded back within the groove when the casing components (1, 2) are assembled, as a result of which said lip is braced by deflection against the wall of the groove (i.e. groove 4) so as to prevent it from being separated again.

2. Casing according to Claim 1,
**characterised** in that
the casing is made from a thermoplastic material such as polyamide.

3. Casing according to Claim 1,
**characterised** in that
if use is made of polyamide by way of casing material the lip (6) at the end of the tongue (5) laterally projects from the latter, in that the base of the tongue (5) in the direction of the width of the groove at the end of the tongue has together with the lip (6) a width a, whereby the said width a in relation to the width b of the groove is between

$$a = 1.5\,b \qquad and \qquad a = 1.35\,b,$$

the thickness b of the tongue in its conceptual cross-section corresponds roughly to the formula

$$d = 0.57 \times b$$

and the thickness c of the lip corresponds roughly to the formula

$$c = 0.14 \times b.$$

4. A casing according to Claim 1,
**characterised** in that
the tongue (5) and the lip (6) are conceptual parts of a wall with a conically tapering cross-section.

5. A casing according to Claim 4,

**characterised** in that
the groove-shaped recess (4) has a round base.

6. A casing according to Claim 1 or Claim 4,
**characterised** in that a wall comprising the tongue (5) tapers in such a way as to bring about tolerance-compensating resilience.


## Revendications

1. Boîtier (1), par exemple pour des appareils électriques ou leurs composants, par exemple des aimants de maintien ou de collage pour des disjoncteurs à courant de défaut, dont le boîtier de base (2) doit être fermé à l'aide d'éléments de fermeture (3), après le montage des éléments devant être logés, le boîtier de base (2) et l'élément de fermeture (3) formant une liaison à serrage au niveau de leurs bords de liaison, par le fait qu'un ressort (5) comportant au moins une lèvre (6) pouvant être appliquée latéralement peut être insérée dans un évidement en forme de rainure (4),
caractérisé par le fait que les dimensions et le matériau sont accordés entre eux de telle sorte que, lors de la réunion des éléments (1,2) du boîtier, la lèvre est déviée dans la rainure en raison de son élasticité propre et de sa longueur par rapport à son épaisseur, de sorte qu'elle prend appui contre la paroi de la rainure (de la rainure 4) en étant bloquée contre un nouveau dégagement.

2. Boîtier suivant la revendication 1, caractérisé par le fait que le boîtier est réalisé en un thermoplaste, comme par exemple du polyamide.

3. Boîtier suivant la revendication 1, caractérisé par le fait que dans le cas où le matériau du boîtier est un polyamide, la lèvre (6) située à l'extrémité du ressort (5) fait saillie latéralement à partir de ce dernier, que la base du ressort (5) possède, dans la direction de la largeur de la rainure, à l'extrémité du ressort, conjointement avec la lèvre (6), une largeur a qui est associée à la largeur b de formation de la rainure selon le rapport

$$a = 1{,}5\,b \qquad et \qquad a = 1{,}35\,b$$

l'épaisseur d du ressort dans la section transversale imaginaire correspondant approximativement à la relation

$$d = 0{,}57 \times b$$

et l'épaisseur c de la lèvre satisfaisant approximativement à la relation

$$c = 0{,}14 \times b.$$

4. Boîtier suivant la revendication 1, caractérisé par le fait que le ressort (5) et la lèvre (6) sont des parties virtuelles d'une paroi qui se rétrécit avec une forme conique en coupe transversale.

5. Boîtier suivant la revendication 4, caractérisé par le fait que l'évidement en forme de rainure (4) comporte un fond arrondi.

6. Boîtier suivant la revendication 1 ou 4, caractérisé par le fait qu'une paroi portant le ressort (5) se rétrécit de telle sorte qu'on obtient une suspension compensant les tolérances.

FIG 1

FIG 2

FIG 3

FIG 6

FIG 5

FIG 4